# EUROPEAN PATENT APPLICATION

(11) **EP 2 365 457 A1**
(43) Date of publication of application: **14.09.2011**
(21) Application number: 10290127.9
(22) Date of filing: 11.03.2010
(51) Int. Cl.: G06F 21/00

(54) **Tag-based secured connection on open device**

(71) Applicant: Alcatel Lucent, 75008 Paris (FR)
(72) Inventor: Hochart, Thierry, 75008 Paris (FR); Pinier, François, 67400 Illkirch (FR)
(74) Representative: Shamsaei Far, Hassan

(57) **Abstract**

The invention concerns a method of authenticating a user of a video terminal to an authentication server by means of a cellular phone, the method comprising the steps of, on the authentication server, generating (101) a machine-readable code; sending (102) the machine-readable code to the video terminal by means of a computer network; receiving (103) a credential from the cellular phone by means of a cellular network; comparing (104) the machine-readable code to the credential; in case of a match (105) between the machine-readable code and the credential, receiving (106) a session code from the cellular phone by means of the cellular network; receiving (107) a further session code from the video terminal by means of the computer network; comparing (108) the session code to the further session code; and, in case of a further match (109) between the session code and the further session code, initiating (110) a terminal session. The invention further concerns a computer program product and a device therefore.

## Description

### Field of the Invention

The invention relates to a method of authenticating a user of a video terminal to an authentication server by means of a cellular phone according to claim 1, a computer program product according to claim 9, and a data storage device according to claim 10.

### Background

Information security is the protection of information and information systems from unauthorized access, use, disclosure, disruption, modification, or destruction. The primary goals of this branch of technology are the confidentiality, integrity and availability of information. When applied to computers, information security is sometimes called computer security. The objective of computer security varies and can include protection of information from theft or corruption, or the preservation of availability, as defined in a security policy.

Authentication is the act of establishing or confirming by a first party that claims made by or about a second party are true. In computer security, authentication is the process of attempting to verify the digital identity of a sender of a communication such as a request to log in. By logging in, also known as logging on, signing in, or signing on, is meant the act of identification of the sender to a system in order to obtain access. The sender being authenticated, often referred to as the principal, may be a person using a computer, a computer itself or a computer program.

Challenge-response authentication is a family of protocols in which an authenticator, commonly called verifier, presents a question and the principal, commonly called prover, must provide a valid answer to be authenticated. In this context, the question is known as a challenge and the answer is known as a response by those skilled in the art of computer security. The simplest example of a challenge-response protocol is password authentication, where the challenge is asking for the password and the valid response is the correct password. In this case, the password is also called a shared secret as it is only known to the parties involved in the secure communication.

Clearly an adversary that can eavesdrop on a password authentication can then authenticate itself in the same way. One known solution is to issue multiple passwords, each of them marked with an identifier. In this case, the entirety of passwords along with their respective identifiers may be considered to constitute the shared secret. The verifier can pick any of the identifiers, and the prover must have the correct password for that identifier. Assuming that the passwords are chosen independently, the adversary who intercepts one challenge-response message pair has no more chance of responding correctly to a different challenge than an adversary who has intercepted nothing. An example of such a challenge-response protocol is disclosed in United States Patent Application Publication No. US 2008/0028225 Al. Here, the prover is a peer node or peer, that is, a participant in a computer network.

A major downside of this known protocol lies in the burden imposed on the user that comes with the necessity to memorize and manage a multitude of passwords.

### Summary

It is an object of the invention to present an improved approach to authentication that allows the user to confirm his or her identity with minimum effort, primarily relying on mobile equipment that the user has readily at hand.

This object is achieved by a method according to claim 1, a computer program product according to claim 9, or a data storage device according to claim 10.

A main idea of the invention is to make use of a cellular phone to capture a machine-readable code corresponding to a credential. Such credential can then be transmitted from the cellular phone to an authentication server to gain access to a resource such as a video terminal.

Further developments of the invention can be gathered from the dependent claims and the following description.

In the following the invention will be explained further making reference to the attached drawing.

To authenticate, according to an embodiment of the invention, a user of a video terminal to an authentication server by means of a cellular phone, the authentication server first generates a machine-readable code and sends it to the video terminal by means of a computer network. In response, the authentication server receives a credential from the cellular phone by means of a cellular network and compares the machine-readable code to the credential. In case of a match between the machine-readable code and the credential, the authentication server receives a session code from the cellular phone by means of the cellular network. Independently, the authentication server receives a further session code from the video terminal by means of the computer network, allowing the authentication server to compare the session code to the further session code. In case of a further match between the session code and the further session code, the authentication server finally initiates a terminal session.

### Brief Description of the Figures

Fig. 1 shows a flowchart depicting a method according to an embodiment of the invention.
Fig. 2 shows a global overview of the invention
Fig. 3 shows an example of the screen of the terminal of the invention

### Description of the Embodiments

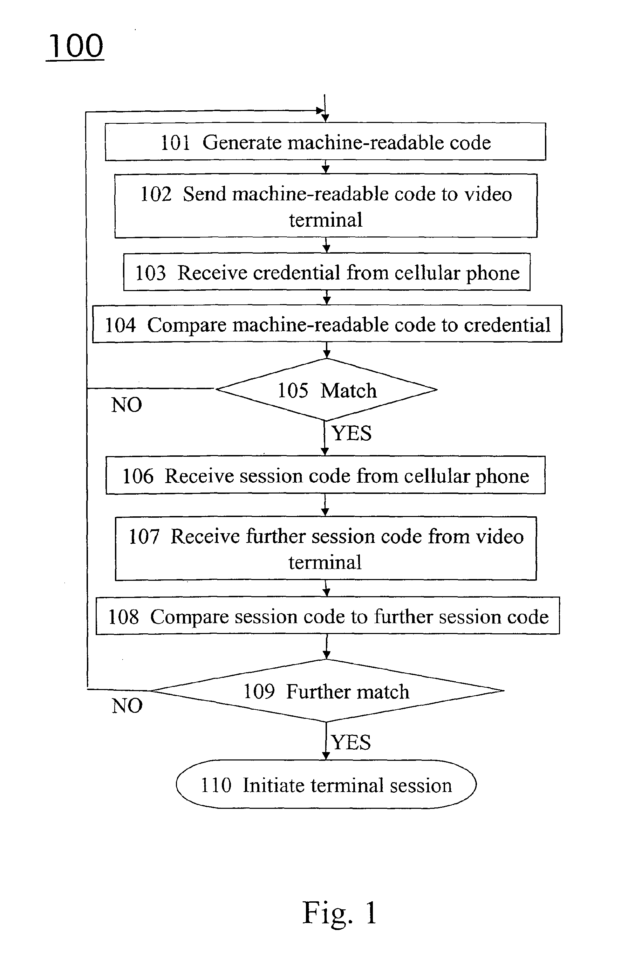

In the following, a method according to the invention is elucidated by way of example, referencing Fig. 1.

The flowchart 100 of Fig. 1 comprises a first processing step 101, a second processing step 102, a third processing step 103, a fourth processing step 104, a fifth processing step 106, a sixth processing step 107, and a seventh processing step 108, each represented by a rectangle. The flowchart 100 further comprises a first decision 105 and a second decision 109, each represented by a rhombus, and a terminator 110, represented by a rounded rectangle. A flow of control passing through the processing steps 101 to 104, the first decision 105, the further processing steps 106 to 108, the second decision 109, and the terminal 110 is represented by a set of arrows. An arrow starting at a first symbol and ending at a second symbol indicates that control passes from the first symbol to the second symbol. The two arrows starting at the first decision 105 and the second decision 109 correspond to a positive or negative decision and are labeled accordingly.

In the embodiment at hand, the method is applied by an authentication server forming a part of a computer network, that is, a group of computers that are connected to each other for the purpose of communication. Herein, by computer is meant any machine that manipulates data according to a set of instructions. The resulting network may be based on, inter alia, optical fiber, Ethernet, wireless LAN, HomePNA, power line communication, or G.hn technology. In this example, the authentication server takes the form of a piece of a software program executed on a computer that is interconnected with other hosts or nodes, that is, connection points, in the computer network. Any such connection is effected by means of physical and logical network components collectively called the link in the art of computer networking, typically governed by a link protocol that operates on adjacent nodes of the network.

To optimize utilization of available link capacity, minimize response times and increase the robustness of communication, the computer network is based on packet switching, that is, a digital network communications method that groups all transmitted data, irrespective of content, type, or structure, into suitably sized blocks called packets. The packet switching network at hand is a shared network which routes each packet independently from all others and allocates transmission resources as needed.

In the first processing step 101, the authentication server generates a machine-readable code. In the embodiment at hand, for improved data representation capability, the code takes the form of a matrix code or data matrix, that is, a two-dimensional barcode consisting of black and white "cells" or modules arranged in either a square or rectangular pattern. To further allow for a seamless integration with state-of-the-art cellular phones, the matrix code conforms with the Flashcode Reader International Specifications as published by the Association française du multimédia mobile (AFMM).

In the second processing step 102, the authentication server sends the machine-readable code to the video terminal by means of the computer network. To minimize the load on the computer network affected by the transmission, the machine-readable code is conveyed in a structured, typically binary, format, rather than as an unstructured graphical representation. To make the machine-readable code available to the user, the video terminal displays the code on a built-in or attached video screen.

In the third processing step 103, the authentication server receives a credential from the cellular phone by means of the cellular network. To this end, to minimize the need for manual interaction between the user and cellular phone, the user employs a built-in camera of the cellular phone to capture and recognize the machine-readable code. Without further user intervention, the cellular phone can then send the machine-readable code to the authentication server, the code thus serving as the credential.

Along with the credential, to allow the authentication server and connected video terminal to control access to the latter's resources by placing restrictions on the user's established identity, the authentication server receives an identification of the user from the cellular phone.

In the fourth processing step 104, the authentication server compares the machine-readable code to the credential. In comparing the image feature to the characteristic during the fourth processing step 104, the authentication server seeks to bring about the first decision 105. If a match can be established, the flow of control proceeds to the fifth processing step 106. If not, to allow the user to reattempt the authentication, the authentication server proceeds by generating an alternative machine-readable code, thus reverting to the first processing step 101.

In the fifth processing step 106, the authentication server receives a session code from the cellular phone by means of the cellular network. To avoid the need to regenerate or reenter the session code every time a session is to be established, the session code is preconfigured and stored in an internal memory of the cellular phone.

In the sixth processing step 107, the authentication server receives a further session code from the video terminal by means of the computer network. This requires the user to key in the session code at the video terminal to prove that the terminal may indeed be allocated to the user due to his physical presence.

For ease of use of the video terminal, the session code and the further session code take the form of human-readable codes that are suitable for entry by means of a touch screen, such as short numeric or alphanumeric sequences. The touch screen may be built into or attached to the video terminal.

In the seventh processing step 108, the authentication server compares the session code to the further session code. In comparing the session code to the further session code during the seventh processing step 108, the authentication server seeks to bring about the second decision 109. If a further match can be established, the authentication server considers the user positively authenticated and the flow of control reaches its terminal 110, causing the authentication server to initiate a session on the video terminal, commonly called a login session in the context of multi-user systems. If no match can be established, to allow the user to reattempt the authentication, the authentication server again proceeds by generating an alternative machine-readable code, thus reverting to the first processing step 101.

In a further processing step (not depicted), prior to reaching the terminal 110 and initiating the terminal session, the authentication server confirms the identification transmitted in the third processing step 103 to positively establish the user's identity.

A person of skill in the art would readily recognize that steps of various above-described methods can be performed by programmed computers. Herein, some embodiments are intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as a magnetic disks or tapes, hard drives, or optically readable digital data storage media. The embodiments are also intended to cover computers programmed to perform said steps of methods described herein.

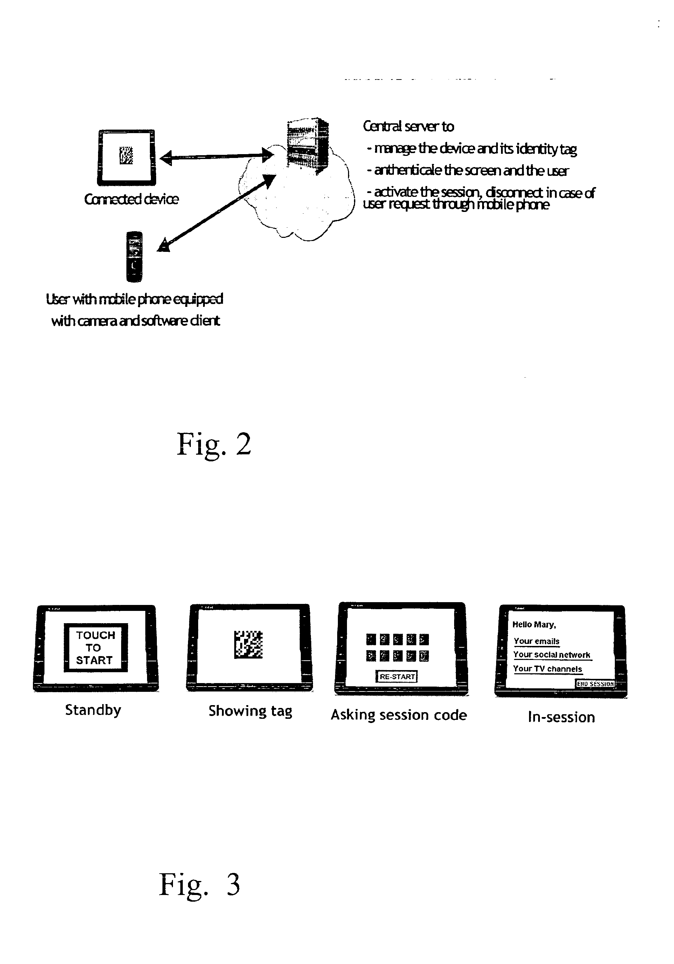

The working mode, described in figure 2, is based on the interaction between the mobile phone running the software client and the central server and between the connected device and the central server. Once the personal session is started, the user can directly interact on the connected device without using the mobile phone, except for closing the connection in case of urgent leave.

The Figure 3 presents the device in 4 modes:
- Standby mode allows the user to touch the screen to start a session
- When showing the tag, it is possible for a user to send the identity of the device to be used
- The device is asking for the session code to securely open the session
- When in-session, the device presents the personal environment and always shows the "End session" part of the screen to disconnect

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of authenticating a user of a video terminal to an authentication server by means of a cellular phone, the method comprising the steps of, on the authentication server,
generating (101) a machine-readable code,
sending (102) the machine-readable code to the video terminal by means of a computer network,
receiving (103) a credential from the cellular phone by means of a cellular network, and
comparing (104) the machine-readable code to the credential,
**characterized in that** the method comprises the further steps of, in case of a match (105) between the machine-readable code and the credential,
receiving (106) a session code from the cellular phone by means of the cellular network,
receiving (107) a further session code from the video terminal by means of the computer network,
comparing (108) the session code to the further session code, and,
in case of a further match (109) between the session code and the further session code, initiating (110) a terminal session.

2. A method according to claim 1, **characterized in that** the machine-readable code is a barcode.

3. A method according to claim 2, **characterized in that** the machine-readable code is a linear barcode.

4. A method according to claim 2, **characterized in that** the machine-readable code is a matrix code.

5. A method according to claim 3, **characterized in that** the machine-readable code is a flashcode.

6. A method according to any of the preceding claims, **characterized in that** the method comprises the further step of receiving an identification of the user from the cellular phone by means of the cellular network.

7. A method according to claim 6, **characterized in that** the method comprises the further step of, prior to initiating the terminal session, confirming the identification.

8. A method according to any of the preceding claims, **characterized in that** the session code and the further session code are human-readable codes suitable for entry by means of a touchscreen of the video terminal.

9. A computer program product comprising computer-executable instructions for performing a method when the program is run on a computer, the method comprising the steps of
generating (101) a machine-readable code,
sending (102) the machine-readable code to a video terminal by means of a computer network,
receiving (103) a credential from a cellular phone by means of a cellular network, and
comparing (104) the machine-readable code to the credential,
**characterized in that** the method comprises the further steps of, in case of a match (105) between the machine-readable code and the credential,
receiving (106) a session code from the cellular phone by means of the cellular network,
receiving (107) a further session code from the video terminal by means of the computer network,
comparing (108) the session code to the further session code, and,
in case of a further match (109) between the session code and the further session code, initiating (110) a terminal session.

10. A device programmed or configured to perform a method comprising the steps of
generating (101) a machine-readable code,
sending (102) the machine-readable code to a video terminal by means of a computer network,
receiving (103) a credential from a cellular phone by means of a cellular network, and
comparing (104) the machine-readable code to the credential,
**characterized in that** the method comprises the further steps of, in case of a match (105) between the machine-readable code and the credential,
receiving (106) a session code from the cellular phone by means of the cellular network,
receiving (107) a further session code from the video terminal by means of the computer network,
comparing (108) the session code to the further session code, and,
in case of a further match (109) between the session code and the further session code, initiating (110) a terminal session.
